# EUROPÄISCHE PATENTSCHRIFT

(11) **EP 0 828 621 B1**
(45) Veröffentlichungstag und Bekanntmachung des Hinweises auf die Patenterteilung: **23.09.1998**
(21) Anmeldenummer: 96919809.2
(22) Anmeldetag: 26.05.1996
(51) Int. Cl.: B60C 23/04

(54) **EINRICHTUNG AN FAHRZEUGEN ZUM ÜBERWACHEN DES LUFTDRUCKS IN DEREN REIFEN**
DEVICE FITTED ON VEHICLES FOR MONITORING TYRE PRESSURE
DISPOSITIF MONTE SUR DES VEHICULES POUR CONTROLER LA PRESSION DES PNEUS

(30) Priorität: 26.05.1995 DE 19518806
(43) Veröffentlichungstag der Anmeldung: 18.03.1998
(73) Patentinhaber: DODUCO GmbH, 75181 Pforzheim (DE)
(72) Erfinder: UHL, Günter, D-74921 Helmstadt-Bargen (DE); NORMANN, Norbert, D-75223 Niefern-Öschelbronn (DE); SCHULZE, Gunter, Lothar, D-75228 Ispringen (DE); KESSLER, Ralf, D-76327 Pfinztal (DE); SCHRÖTTLE, Michael, CH-8566 Ellighausen (CH)
(74) Vertreter: Leitner, Waldemar, Dr. techn.
(86) Internationale Anmeldenummer: EP9602264
(87) Internationale Veröffentlichungsnummer: WO9637374

(56) Entgegenhaltungen:
- EP-A- 0 695 652
- WO-A-94/06640
- DE-C- 4 108 337
- GB-A- 1 294 967
- US-A- 2 860 321
- US-A- 3 872 424

## Beschreibung

Die Erfindung geht aus von einer Einrichtung an Fahrzeugen zum Überwachen des Luftdrucks in dessen Reifen mit den im Oberbegriff des Anspruchs 1 angegebenen Merkmalen. Eine solche Einrichtung ist aus der GB 1 294 967 A bekannt. Bei dieser bekannten Einrichtung zur Überwachung des Luftdrucks in den Reifen eines Fahrzeugs sind in jedem Rad Druckmeßfühler angeordnet, die jeweils mit einem Sender verbunden sind. Dabei ist jedem Rad benachbart lediglich eine Antenne angeordnet und die Antennen sind mit einer gemeinsamen elektronischen Empfangs- und Auswerteschaltung verbunden. Die an den Rädern vorgesehenen Sender sind nicht miteinander synchronisiert. Deshalb ist es möglich, daß sich von verschiedenen Rädern kommende Signalfolgen am Eingang der Empfangs- und Auswerteschaltung überlappen und dadurch eine eindeutige Auswertung verhindern. Einen Ausweg aus dieser Schwierigkeit weist die DE-41 33 993C2. Die daraus bekannte Einrichtung zur Überwachung des Reifendrucks hat einen Druckmeßfühler und einen Sender, welche in Gestalt einer elektronischen Baugruppe in die Ventilkappe des jeweiligen Rades integriert sind. Um eine Fernabfrage des gemessenen Reifendrucks durchzuführen, ist eine Kombination aus Sender und Empfangseinrichtung, vorzugsweise in einem tragbaren Fernbedienungsgerät untergebracht, vorgesehen. Mit dem Fernbedienungsgerät geht man zum jeweiligen Rad, aktiviert die in der Ventilkappe befindliche elektronische Baugruppe und frägt sie ab. In diesem Fall kann der Reifendruck nur von Zeit zu Zeit bei stehendem Fahrzeug überwacht werden, nicht aber während der Fahrt. Die DE 41 33 993 C2 offenbart aber auch bereits die Möglichkeit, Sende- und Empfangseinrichtungen für das Abfragen der in der Ventilkappe vorgesehenen elektronischen Baugruppe nicht in einem tragbaren Fernbedienungsgerät, sondern benachbart zum Rad am Chassis des Fahrzeuges sowie Anzeigeeinrichtungen am Armaturenbrett vorzusehen. Das ist eine aufwendige Lösung, denn in diesem Fall werden von dem am Rad vorgesehenen Sender Signale, welche den vom Druckmeßfühler ermittelten Luftdruck beinhalten, drahtlos an eine gesonderte, dem betreffenden Rad zugeordnete Sende- und Empfangseinrichtung übertragen.

Eine ähnliche Einrichtung ist aus der DE 41 33 999 bekannt; dabei sind der Druckmeßfühler und der Sensor aber nicht in einer Ventilkappe, sondern am Ventilfuß angeordnet.

Aus der EP 0 417 712 B1 ist es bekannt, am Ventilfuß eines Luftreifens eine aus einem Druckmeßfühler und einem Sender bestehende Baugruppe vorzusehen und jedem Sender in einem Reifenventil einen eigenen, entsprechend abgestimmten Empfänger im Radbereich des Fahrzeugs zuzuordnen.

Der vorliegenden Erfindung liegt die Aufgabe zugrunde, einen Weg aufzuzeigen, wie auch bei einer im Aufbau und in der Installation einfachen und preiswerten Einrichtung zum Überwachen des Reifendrucks bei Fahrzeugen während der Fahrt ebenso wie bei stehendern Fahrzeug eine eindeutige Signalauswertung möglich ist.

Diese Aufgabe wird gelöst durch eine Einrichtung mit den im Anspruch 1 angegebenen Merkmalen. Vorteilhafte Weiterbildungen der Erfindung sind Gegenstand der abhängigen Ansprüche.

Der erfindungsgemäß vorgesehene Gleichrichter bewirkt eine Gleichrichtung des abgezweigten Signalanteils. Bei ausreichender Feldstärke des Signals kann der gleichgerichtet Anteil einen Eingang des Mikrocomputers HIGH setzen. Auf diese Weise kann der Mikrocomputer das ihm übermittelte Signal einem bestimmten Rad zuordnen. Werden gleichzeitig oder überlappend Signale von mehreren Rädern übermittelt, so erkennt der Mikrocomputer das daran, daß mehrere seiner Eingänge HIGH gesetzt werden und wertet dann die Signale nicht aus, so daß eine Fehlbeurteilung vermieden wird.

In der Nachbarschaft eines jeden Rades ist lediglich eine Antenne vorgesehen und alle Antennen sind mit einer gemeinsamen elektronischen Empfangs- und Auswerteschaltung verbunden. Von der Antenne im Radhaus muß lediglich ein Antennenkabel bis zur Empfangsschaltung verlegt werden, welche irgendwo zentral im Fahrzeugchassis untergebracht ist, z. B. im Bereich des Armaturenbrettes. Die Antennenkabel erfordern keine aufwendige Einzelverlegung, sondern können mit den anderen in der Nachbarschaft des Rades zu verlegenden Kabeln zu einem Kabelbaum zusammengefaßt werden, der vorkonfektioniert wird.

Besonders vorteilhaft ist es , wenn als als Antenne nicht eine gesonderte elektrische Leitung verlegt, sondern eine elektrische Leitung genutzt wird, die ohnehin verlegt werden muß und z. B. einer demselben Rad zugeordneten weiteren Überwachungseinrichtung angehört, insbesondere einer den Bremsbelagverschleiß am jeweiligen Rad überwachenden Einrichtung oder einem ABS-System oder einer Regeleinrichtung, welche bei angetriebenen Rädern das Auftreten von Schlupf verhindert. Das verringert den Schaltungsaufwand, die Störanfälligkeit, und reduziert schließlich den Installations- und Verkabelungsaufwand, weil eine elektrische Leitung, die in den Bereich eines jeden zu überwachenden Rades geführt wird, mehrfach genutzt wird. Letzteres ist besonders wichtig, weil mit der in den letzten Jahren stark angestiegenen Zahl von Funktionen, die im Fahrzeug auf elektrischem Wege überwacht, gesteuert und betätigt werden, der Verkabelungsaufwand so stark zugenommen hat, daß bereits große Schwierigkeiten bestehen, die immer dicker werdenden Kabelbäume in den Hohlräumen der Karosserie unterzubringen. Durch die vorgesehene Mehrfachnutzung einer elektrischen Leitung steigt der Verkabelungsaufwand für die Signalübertragung vorn Sender zur Empfangs- und Auswerteschaltung nicht, obwohl jedem Rad eine eigene Antenne zugeordnet ist.

Die Leitung muß natürlich als Antenne für den vorgesehenen Frequenzbereich geeignet sein. Für die Signalübertragung kommen Frequenzen im Bereich von einigen hundert MHz, insbesondere 433 MHz, in Frage. Da für ABS und ASR Frequenzen von maximal einigen kHz üblich sind und auch die Verschleißanzeige für den Bremsbelag niederfrequent oder mit Gleichstrom erfolgt, lassen sich die hochfrequenten Signale für die Reifendrucküberwachung und die niederfrequenten Signale für die übrige Überwachung problemlos auf einer gemeinsamen Leitung übertragen und wieder trennen.

Vorzugsweise setzt man als elektrische Leitung ein koaxiales Kabel ein, welches in der Nachbarschaft des jeweiligen Rades auf einem Teil seiner Länge von seinem Außenleiter befreit ist, insbesondere auf einer Länge, die einer Viertelwellenlänge des zu übertragenden Reifendrucksignals entspricht - bei einer Frequenz von 433 MHz sind dies 17 cm.

Eine andere Möglichkeit besteht darin, die Sensoren, die im ABS-System, in der ASR-Regelung oder zur Verschleißanzeige bei Bremsbelägen benutzt werden, so zu modifizieren, daß sie als Antennen für die Reifendrucküberwachung tauglich werden. Auch in diesem Fall werden die Zuleitungen zu der weiteren Überwachungseinrichtung durch die Mitbenutzung für die Reifendrucküberwachung doppelt ausgenutzt.

Es können aber auch andere als zu einer Überwachungseinrichtung führende Leitungen als Antennenkabel genutzt werden , wenn sie hinreichend nahe am jeweiligen Rad verlegt sind, z. B. Leitungen, die eine Leuchte oder einen anderen elektrischen Verbraucher mit Strom versorgen.

Weitere Vorteile und Ausgestaltungen der Erfindung ergeben sich aus der nachfolgenden Beschreibung von Ausführungsbeispielen anhand der beigefügten Zeichnungen .
- Figur 1: zeigt schematisch die Anordnung einer ersten Einrichtung zur Reifendrucküberwachung in einem Fahrzeug,
- Figur 2: zeigt schematisch die Anordnung einer zweiten Einrichtung zur Reifendruckkontrolle in einem Fahrzeug,
- Figur 3: zeigt ein Blockschaltbild eines Schaltungsteils zur Trennung von hochfrequenten und niederfrequenten Signalanteilen,
- Figur 4: zeigt als Blockschaltbild eine Ausführungsform einer Empfangs- und Auswerteschaltung mit nur einem Empfänger, und
- Figur 5: zeigt als Blockschaltbild eine weitere Ausführungsform einer Empfangs- und Auswerteschaltung mit nur einem Empfänger.

Gleiche oder einander entsprechende Teile sind in den verschiedenen Figuren mit übereinstimmenden Bezugszahlen bezeichnet.

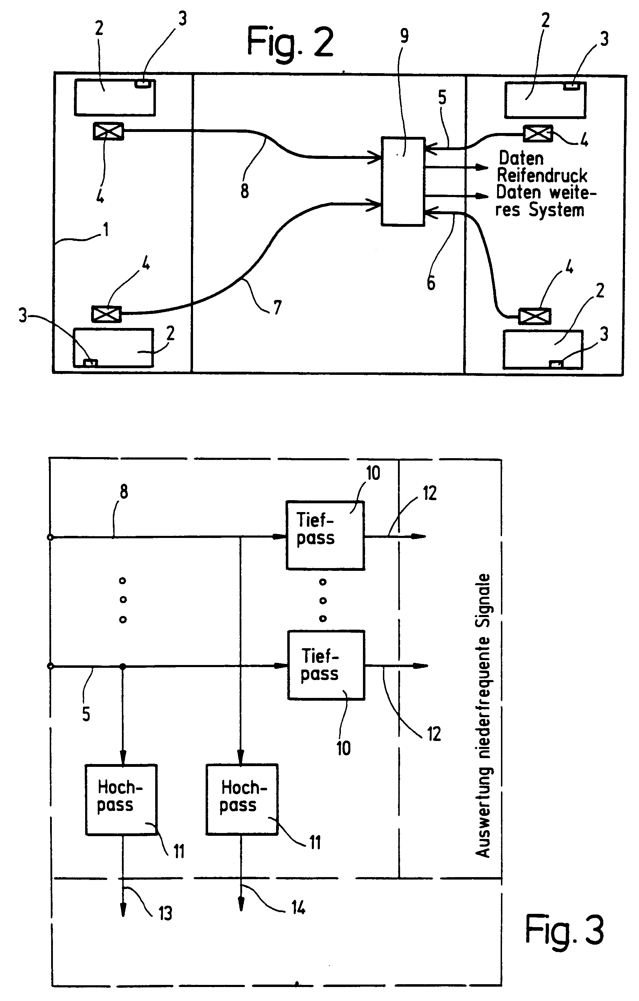

Figur 1 zeigt schematisch im Grundriß das Chassis 1 eines Fahrzeugs mit vier Rädern 2, von denen jedes mit einer aus einem Druckmeßfühler und einem Sensor bestehenden Anordnung 3 ausgerüstet ist. Jedem Rad 2 ist eine Antenne 5a, 6a, 7a, 8a zugeordnet. Die Antennen sind durch einen Abschnitt eines Koaxialkabels 5, 6, 7, 8 gebildet, welcher von seinem Außenleiter befreit ist, so daß der Innenleiter des Koaxialkabels in diesem Abschnitt 5a,6a,7a,8a nicht mehr vom Außenleiter abgeschirmt ist, sondern Hochfrequenzsignale empfangen kann. Die Koaxialkabel 5, 6, 7, 8 führen zu einer Trennschaltung 9, welche in Figur 3 dargestellt ist. Die Länge der Abschnitte 5a, 6a, 7a, 8a beträgt zweckmäßigerweise eine Viertelwellenlänge der Sendefrequenz des in der Anordnung 3 vorgesehenen Senders; bei einer Frequenz von 433 MHz sind das ca. 17cm.

Das in Figur 2 dargestellte Ausführungsbeispiel unterscheidet sich von dem in Figur 1 dargestellten Ausführungsbeispiel darin, daß jedem Rad 2 ein Sensor 4 zugeordnet ist, welcher sich in der Nachbarschaft des Rades 2 befindet. Bei dem Sensor 4 kann es sich um einen Sensor handeln, der im Rahmen eines ABS-Systems oder eines ASR-Systems die Raddrehung überwacht, oder um einen Sensor, der den Verschleiß des Bremsbelages einer dem Rad 2 zugehörigen Scheibenbremse überwacht.

Von den Sensoren 4 führen elektrische Leitungen 5, 6, 7 und 8 zu einer Trennschaltung 9, welche beispielhaft in Figur 3 dargestellt ist.

Auch in diesem zweiten Beispiel sind die Leitungen 5 bis 8 zur Übertragung von Hochfrequenzsignalen geeignet; insbesondere sind es koaxiale Kabel. Sie übertragen nicht nur die von den Sensoren 4 erzeugten ABS-, ASR- oder Bremsbelagverschleißsignale, sondern auch Signale, welche von den Sendern in den Anordnungen 3 drahtlos übermittelt werden. Zu diesem Zweck sind die Sensoren 4 so abgewandelt, daß sie gleichzeitig als HF-Antennen dienen.

Die von den Anordnungen 3 übertragenen Signale, die auf die in den Figuren 1 und 2 dargestellte Weise empfangen werden können, werden in der Trennschaltung 9 durch Tiefpaßfilter 10 und Hochpaßfilter 11 von etwaigen Gleichstromanteilen und im Beispiel der Figur 2 von niederfrequenten Signalen der Sensoren 4 getrennt. Die niederfrequenten Signale werden über Leitungen 12 einer bekannten Auswerteschaltung zugeführt, die nicht Gegenstand der vorliegenden Erfindung ist.

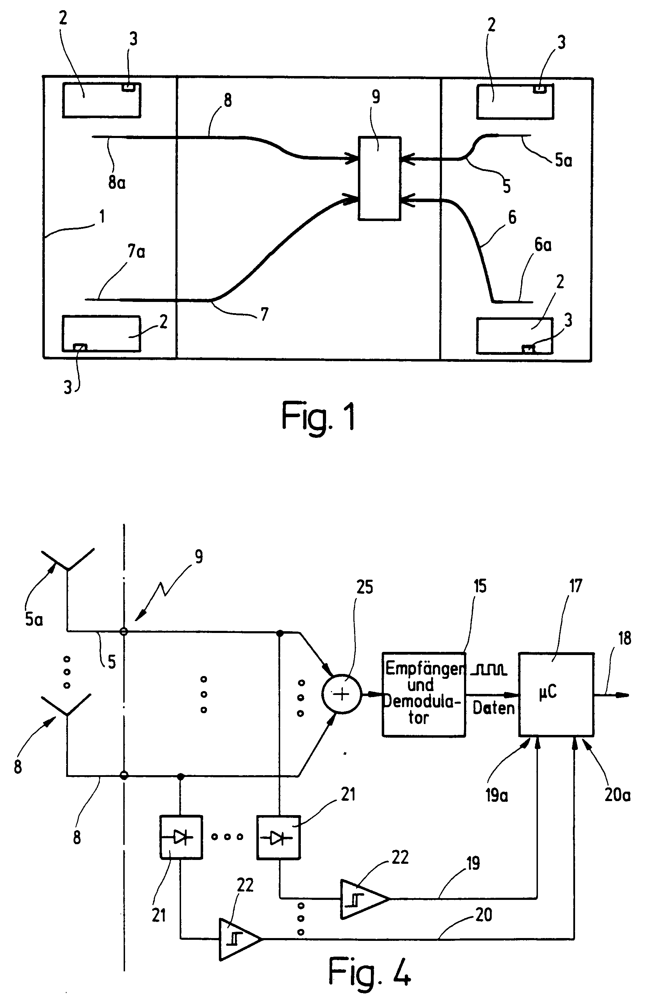

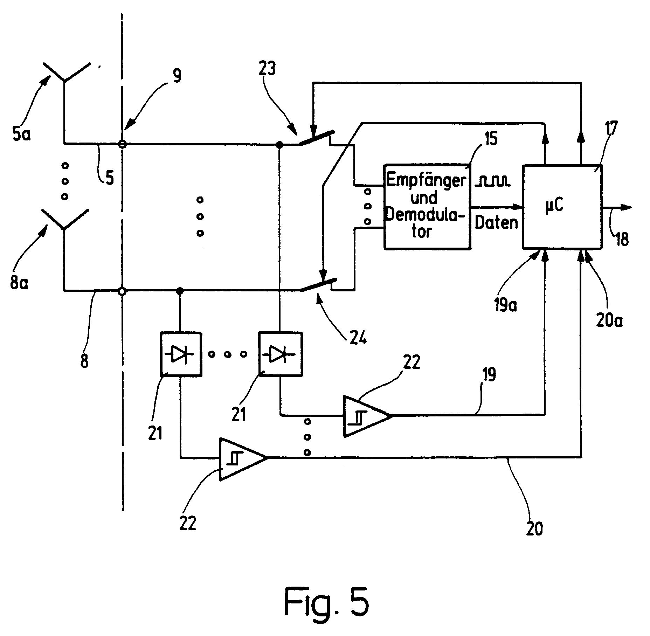

Die hochfrequenten Signale werden über getrennte Leitungen 13, 14 einer dafür geeigneten Empfangs- und Auswerteschaltung zugeführt. Dafür geeignete Schaltungen sind in den Figuren 4 und 5 dargestellt.

Bei der in Figur 4 dargestellten Schaltungsanordnung werden die vom Sender am Rad 2 ausgesandten, die Information über den Luftdruck im Reifen enthaltenden Signale von Antennen 5a-8a, bei denen es sich um die vom Außenleiter befreiten Abschnitte der koaxialen Leitungen 5 bis 8 handeln kann, aufgefangen, über die koaxialen Leitungen 5 bis 8, über die Trennschaltung 9, in Figur 4 lediglich als Schnittstelle dargestellt, zu einem gemeinsamen Empfänger15 mit Demodulator übertragen. Für die Signalauswertung ist ein Mikrocomputer 17 vorgesehen, welchem die demodulierten Signale zugeführt werden. Am Ausgang 18 liefert der Mikrocomputer 17 Signale, die eine Anzeigeeinrichtung, z.B. ein LCD-Display oder eine Warnleuchte, steuern.

Die Empfangssignale aller Antennen 5a-8a werden in einer Summierstufe 25 summiert und dem einzigen Empfänger 15 und Demodulator eingegeben, der aus dem von den Rädern 2 gesendeten Datentelegramm ein Binärsignal bildet und dem als Auswerteschaltung vorgesehenen Mikrocomputer 17 eingibt.

Wie im Stand der Technik beschrieben, arbeiten die Anordnungen 3 aus Druckmeßfühler und Sensor nicht permanent, sondern werden zur Schonung der sie betreibenden Batterie nur in Zeitabständen aktiviert und senden dann ein Datentelegramm an den Empfänger 15. Da die an den Rädern 2 vorgesehenen Sender nicht zueinander sychronisiert sind, ist es möglich, daß Datentelegramme von verschiedenen Rädern 2 einander überlappen. Um dennoch eine eindeutige Reifendrucküberwachung durchführen zu können, ist vorgesehen, für jedes Signal, welches dem Empfänger 15 zugeleitet wird, eine Feldstärkeauswertung durchzuführen. Zu diesem Zweck führt von den Zuleitungen 5-8 jeweils eine Zweigleitung 19, 20 unter Umgehung des Empfängers 15 zum Mikrocomputer 17. In jeder dieser Zweigleitungen 19, 20 liegen hintereinander ein Gleichrichter 21 und ein Grenzwertschalter 22. Der Gleichrichter 21 bewirkt eine Gleichrichtung des abgezweigten Signalanteils. Bei ausreichender Feldstärke des Signals kann der gleichgerichtete Anteil den Grenzwertschalter 22 passieren und gelangt auf einen Eingang 19a bzw. 20a des Mikrocomputers, der daraufhin HIGH gesetzt wird. Auf diese Weise kann der Mikrocomputer 17 das ihm vom Empfänger 15 übermittelte Signal einem bestimmten Rad 2 zuordnen. Werden gleichzeitig bzw. einander überlappend von mehreren Rädern Daten empfangen, dann werden dementsprechend mehrere Eingänge 19a, 20a des Mikrocomputers HIGH gesetzt. In diesem Fall werden die vom Empfänger 15 an den Mikrocomputer 17 übermittelten Daten nicht ausgewertet.

Die in Figur 5 dargestellte Ausführungsform unterscheidet sich von der in Figur 4 dargestellten Ausführungsform dahingehend, daß dem Empfänger 15 für jedes Rad 2 ein vom Mikrocomputer 17 steuerbarer Schalter 23, 24 vorangestellt ist. Die Schalter 23, 24 ersetzen die Summierstufe 25 in Figur 4. Die von den Antennen 5a-8a kommenden Signale werden über die Schalter 23, 24 zum Empfänger 15 mit Demodulator durchgeschaltet. Die Feldstärkeauswertung erfolgt wie im Ausführungsbeispiel gemäß Figur 4. Erst wenn ein von einer der Leitungen 5 - 8 abgezweigtes und gleichgerichtetes Signal einen der Eingänge 19a, 20a des Mikrocomputers HIGH gesetzt hat, wird der in der zugehörigen Leitung 5 - 8 liegende Schalter 23, 24 geschlossen und das von der Antenne 5a-8a kommende Signal auf den Empfänger 15 durchgeschaltet. Ein weiteres, zeitlich überlappend eintreffendes Signal von einer anderen Antenne wird vom Mikrocomputer 17 nicht auf den Empfänger 15 durchgeschaltet und stört die Auswertung des zuerst eingetroffenen Signales nicht. Bei sich überlappenden, von den Rädern 2 gesendeten Datentelegrammen wird das zuerst empfangene ausgewertet. Es ist aber auch möglich, mit einer Prioritätenliste zu arbeiten: Das heißt z.B., daß dann, wenn bei überlappend empfangenen Datentelegrammen das als zweites ankommende von einem Rad mit höherer Priorität kommt, die Auswertung des ersten Datentelegramms abgebrochen und auf das zweite umgeschaltet wird. Eine weitere Möglichkeit besteht darin, die den Rädern zugeordneten Antennen 5a-8a vom Mikrocomputer 17 zyklisch abfragen zu lassen. In diesem Fall kann auf eine Feldstärkeauswertung verzichtet werden.

## Patentansprüche

1. Einrichtung an Fahrzeugen, welche Räder mit Luftreifen haben, zum Überwachen des Luftdrucks in den Reifen
mit einem Druckmeßfühler an jedem der zu überwachenden Räder (2),
mit einem beim jeweiligen Druckmeßfühler angeordneten Sender, welcher Signale, die den vorn Druckmeßfühler ermittelten Luftdruck beinhalten, aussendet,
und mit Antennen für den Empfang dieser Signale, welche am Chassis des Fahrzeugs angebracht sind, wobei lediglich eine Antenne (4; 5a- 8a) jedem Rad (2) benachbart angeordnet ist und die Antennen (4; 5a- 8a) mit einer gemeinsamen elektronischen Empfangs- und Auswerteschaltung im (15,17) verbunden sind,
**dadurch gekennzeichnet,** daß von den elektrischen Leitungen (5,6,7,8), welche von den Antennen zu der Empfangsschaltung (15) führen, jeweils eine Zweigleitung (19, 20), in welcher ein Gleichrichter (21) liegt zu einer als Mikrocomputer ausgebildeten Auswerteschaltung (17) führt, welche durch die gleichgerichteten Signale derart gesteuert wird, daß jedesmal dann, wenn über eine der Antennen ein vom Sender (3) am Rad (2) ausgesandtes Signal empfangen wird, der Mikrocomputer (17) nur dieses über die entsprechende Leitung (5-8) an die Empfangsschaltung (15) übermittelte Signal auswertet.

2. Einrichtung nach Anspruch 1, **dadurch gekennzeichnet**, daß die Antenne(4; 5a- 8a) eine elektrische Leitung( 5 - 8 ) nutzt, die einer demselben Rad ( 2 ) zugeordneten weiteren Überwachungseinrichtung angehört.

3. Einrichtung nach Anspruch 1, **dadurch gekennzeichnet**, daß ein Sensor( 4), der einer demselben Rad (2) zugeordneten weiteren Überwachungseinrichtung angehört, zu einer Antenne weitergebildet ist.

4. Einrichtung nach Anspruch 1, **dadurch gekennzeichnet**, daß eine in der Nachbarschaft des jeweiligen Rades (2) verlegte elektrische Leitung, welche zu einem sonstigen Verbraucher, z. B. zu einer Heckleuchte, führt, als Antenne genutzt wird.

5. Einrichtung nach Anspruch 2 oder 3, **dadurch gekennzeichnet,** daß die weitere Überwachungseinrichtung (4) den Bremsbelagverschleiß überwacht.

6. Einrichtung nach Anspruch 2 oder 3, **dadurch gekennzeichnet,** daß die weitere Überwachungseinrichtung (4) die Räder (2) auf Blockieren (ABS-System) und/oder Schlupf (ASR-System) überwacht.

7. Einrichtung nach einem der vorstehenden Ansprüche, **dadurch gekennzeichnet,** daß die elektrische Leitung (5, 6, 7, 8) ein koaxiales Kabel ist, welches auf einem Teil seiner Länge in der Nachbarschaft des Rades (2) von seinem Außenleiter befreit ist.

8. Einrichtung nach einem der vorstehenden Ansprüche, **dadurch gekennzeichnet,** daß in den Zweigleitungen (19, 20) jeweils ein Grenzwertschalter (22) liegt, welcher die gleichgerichteten Signale nur dann an die Auswerteschaltung durchlassen, wenn sie einen Grenzwert übersteigen.

9. Einrichtung nach Anspruch 8, **dadurch gekennzeichnet**, daß in jeder der von den Antennen zu der Empfangsschaltung führenden Leitungen (5 - 8) ein vom Mikrocomputer (17) gesteuerter Unterbrecherschalter (23,24) liegt..

## Claims

1. A device on vehicles which have wheels with pneumatic tyres, for monitoring the air pressure in the tyres,
having a pressure sensor on each of the wheels (2) to be monitored;
having a transmitter, associated with the respective pressure sensor, which sends out signals that contain the air pressure determined by the pressure sensor, and
having antennas for the reception of said signals which are mounted on the chassis of the vehicle, only one antenna (4; 5a - 8a) being arranged in the vicinity of each wheel (2), and the antennas (4; 5a - 8a) being connected to a common electronic receiving and analysis circuit (15, 17);
wherein a diversion line (19, 20), in which a rectifier (21) is located, leads in each case from the electrical lines (5, 6, 7, 8) which lead from the antennas to the receiving circuit (15) to an analysis circuit (17), configured as a microcomputer, which is controlled by the rectified signals in such a way that each time a signal sent out by the transmitter (3) on the wheel (2) is received via one of the antennas, the microcomputer (17) analyzes only that signal transmitted via the corresponding line (5 - 8) to the receiving circuit (15).

2. The device as defined in Claim 1, wherein the antenna (4; 5a - 8a) uses an electrical line (5 - 8) which belongs to a further monitoring device associated with the same wheel (2).

3. The device as defined in Claim 1, wherein a sensor (4) which belongs to a further monitoring device associated with the same wheel (2) is reconfigured into an antenna.

4. The device as defined in Claim 1, wherein an electrical line that is laid in the vicinity of the respective wheel (2) and leads to a different load, for example to a taillight, is used as an antenna.

5. The device as defined in Claim 2 or 3, wherein the further monitoring device (4) monitors brake lining wear.

6. The device as defined in Claim 2 or 3, wherein the further monitoring device (4) monitors the wheels (2) for locking (ABS system) and/or slip (ASR system).

7. The device as defined in one of the foregoing claims, wherein the electrical line (5, 6, 7, 8) is a coaxial cable which has been stripped of its external conductor over a portion of its length in the vicinity of the wheel (2).

8. The device as defined in one of the foregoing claims, wherein a limit value switch (22), which allows the rectified signals to pass through to the analysis circuit only if they exceed a limit value, is located in each of the diversion lines (19, 20).

9. The device as defined in Claim 8, wherein an interrupter switch (23, 24) controlled by the microcomputer (17) is located in each of the lines (5 - 8) leading from the antennas to the receiving circuit.

## Revendications

1. Dispositif de contrôle de la pression des pneus, monté sur des véhicules munis de roues avec pneus, comportant un capteur de pression sur chaque roue (2) à contrôler, un émetteur disposé avec chaque capteur de pression, lequel émet des signaux qui contiennent la pression des pneus déterminée par le capteur de pression, et des antennes pour la réception desdits signaux, qui sont montées contre le châssis du véhicule, une seule antenne (4 ; 5a-8a) étant disposée à proximité de chaque roue (2) et les antennes (4 ; 5a-8a) étant reliées les unes aux autres par l'intermédiaire d'un circuit électronique de réception et d'exploitation des données (15, 17),
caractérisé en ce que, à partir de chacune des lignes électriques (5, 6, 7, 8), qui relient les antennes à l'unité de réception (15), part une ligne de dérivation (19, 20), dans laquelle est monté un redresseur de courant (21), vers une unité d'exploitation des données (17), conçue sous forme de micro-ordinateur, laquelle unité d'exploitation des données est commandée par les signaux démodulés de telle sorte que chaque fois qu'un signal émis par l'émetteur (3), monté sur la roue (2), est reçu par l'intermédiaire de l'une des antennes, le microordinateur (17) n'exploitera que ledit signal transmis par la ligne (5-8) correspondante vers l'unité de réception (15).

2. Dispositif selon la revendication 1, caractérisé en ce que l'antenne (4 ; 5a-8a)) utilise une ligne électrique (5-8), qui appartient à un autre dispositif de contrôle affecté à la même roue (2).

3. Dispositif selon la revendication 1, caractérisé en ce qu'un capteur (4), qui appartient à un autre dispositif de contrôle affecté à la même roue (2), est amélioré pour former une antenne.

4. Dispositif selon la revendication 1, caractérisé en ce qu'une ligne électrique, montée à proximité de chaque roue (2) et qui communique avec un récepteur usuel, un feu arrière de véhicule, par exemple, est utilisée comme une antenne.

5. Dispositif selon la revendication 2 ou 3, caractérisé en ce que l'autre dispositif de contrôle (4) contrôle l'usure de la garniture des freins.

6. Dispositif selon la revendication 2 ou 3, caractérisé en ce que l'autre dispositif de contrôle (4) contrôle le blocage (système ABS) et/ou le patinage (système ASR = régulateur du patinage des roues) des roues (2).

7. Dispositif selon l'une quelconque des revendications précédentes, caractérisé en ce que la ligne électrique (5, 6, 7, 8) est un câble coaxial, dont une partie de la longueur à proximité de la roue (2) est libérée de son conducteur extérieur.

8. Dispositif selon l'une quelconque des revendications précédentes, caractérisé en ce qu'un actionneur de valeur limite (22) est monté dans chacune des lignes de dérivation (19, 20), lequel actionneur ne laisse passer les signaux démodulés émis vers l'unité d'exploitation des données qu'à condition qu'ils soient supérieurs à une valeur limite.

9. Dispositif selon la revendication 8, caractérisé en ce qu'un disjoncteur (23, 24), commandé par le micro-ordinateur (17), est monté dans chacune des lignes électriques (5-8) qui relient les antennes au circuit de réception.
